# EUROPEAN PATENT APPLICATION

(11) **EP 3 246 582 A1**
(43) Date of publication of application: **22.11.2017**
(21) Application number: 17165629.1
(22) Date of filing: 07.04.2017
(51) Int. Cl.: F16C 1/20, D07B 5/00, D07B 1/06

(54) **AUTOMOTIVE POWER TRANSMISSION CABLE**

(30) Priority: 20.05.2016 KR 20160062229
(71) Applicant: Daedong System Co., Ltd., Incheon 21629 (KR)
(72) Inventor: LEE, Ho Chul, 21363 Incheon (KR); YANG, Seung Cheol, 21328 Incheon (KR); SHIN, Dong Hyuk, 21910 Incheon (KR)
(74) Representative: Jell, Friedrich

(57) **Abstract**

Provided is an automotive power transmission cable for transmitting power among components in a vehicle, the automotive power transmission cable including: a hollow outer (200); and an inner (100) provided in the outer (200) to be movable relative to the outer (200) to transmit the power among the components in the vehicle while moving with respect to the outer (200) in the outer (200), wherein the inner (100) includes: a core wire (110) centered in the outer (200); a plurality of first wires (120) arranged around the core wire (110) between the core wire (110) and an internal surface of the outer (200), each of the plurality of first wires (120) having an outer diameter contacting the internal surface of the outer (200); and a plurality of second wires (130) including a different material from a material of the plurality of first wires (120), having an outer diameter less than an outer diameter of the plurality of first wires (120), not contacting the internal surface of the outer (200) when the core wire (110) is straight, not curved, and provided more than the number of the plurality of first wires (120) to be arranged between adjacent ones of the plurality of first wires (120).

## Description

### TECHNICAL FIELD

The present invention relates to an automotive power transmission cable, and more particularly, to an automotive power transmission cable having an improved structure to improve product operating performance by improving frictional characteristics between an outer and an inner while ensuring durability of a power transmission cable.

### BACKGROUND ART

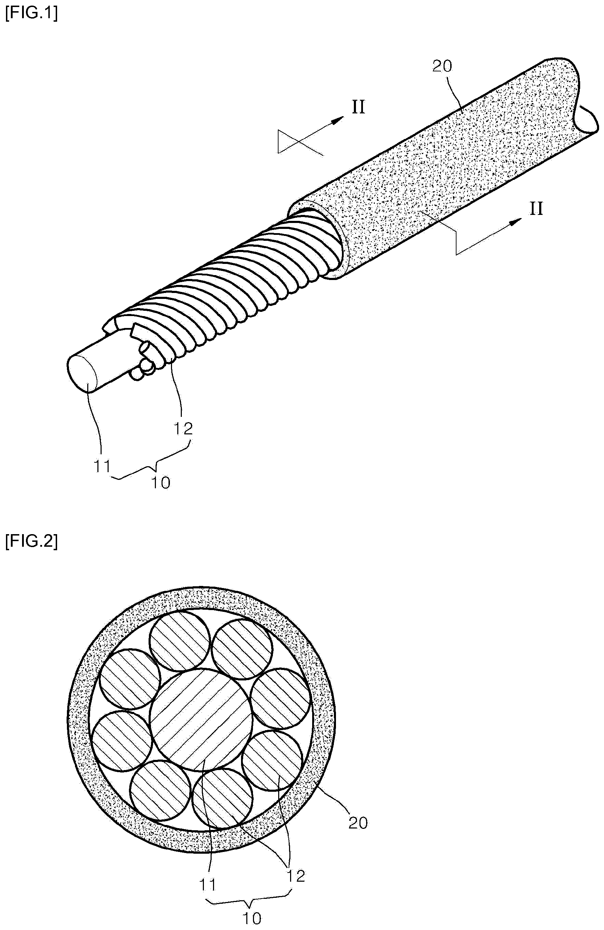

An automotive power transmission cable generally includes an inner 10 including a center line 11 and a plurality of wires 12, and an outer 20, as shown in FIGS. 1 and 2.

The inner 10 is disposed inside the outer 20, and the center line 11 includes a steel material and the plurality of wires 12 of equal sizes having a diameter less than that of the center line 11 are provided surrounding the center line 11 of the steel material.

When an outer diameter of the inner 10 is Ø3.2, the center line 11 of the inner 20 has an outer diameter of Ø2.0, and the wires 12 each has an outer diameter of Ø0.6 and are provided as twelve (12) wires.

The inner 10 moves relative to the outer 20 so as to perform as a medium for transmitting power among components of a vehicle.

In addition, a contact portion of the outer 20 with respect to the inner 10 includes a synthetic resin material, and is provided to surround the wires 12 of the inner 10 so as to protect the inner 10 and to guide the relative movement.

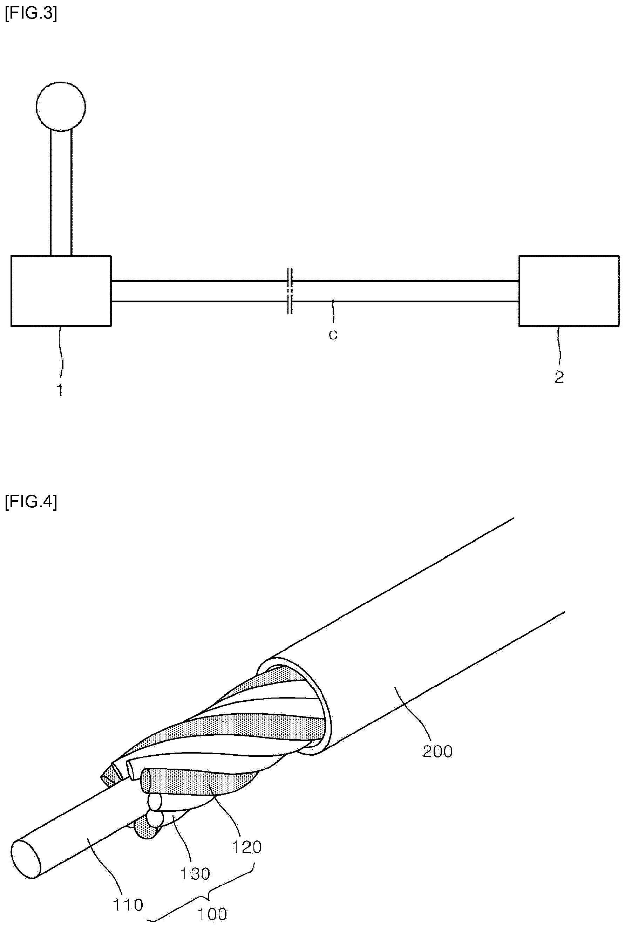

As shown in FIG. 3, a power transmission cable C according to the related art is connected between a transmission lever 1 and a transmission 2, and the inner 10 moves relative to the outer 20 so as to transmit power transmitted from the transmission lever 1 to the transmission 2.

As described above, according to the power transmission cable C of the related art, when the inner 10 moves relative to the outer 20, since the inner 10 includes a steel material and all the wires 12 of the inner 10 contact the outer 20 and thus friction between the inner 10 and the outer 20 increases, operating performance of the inner 10 may degrade.

To address the above problem, the material of the inner 10 may be replaced with a stainless-steel material. When the inner 10 includes the stainless-steel material, the operating performance of the inner 10 with respect to the outer 20 may be improved, but manufacturing costs of the cable may increase.

### DETAILED DESCRIPTION OF THE INVENTIVE CONCEPT TECHNICAL PROBLEM

The present invention provides an automotive power transmission cable capable of improving operating performance between wires of an inner and an outer while ensuring durability of the automotive power transmission cable, by manufacturing a core wire and the wires of the inner to have different materials.

### TECHNICAL SOLUTION

One or more embodiments of the present disclosure provide an automotive power transmission cable for transmitting power among components in a vehicle, the automotive power transmission cable including: a hollow outer; and an inner provided in the outer to be movable relative to the outer to transmit the power among the components in the vehicle while moving with respect to the outer in the outer, wherein the inner includes: a core wire centered in the outer; a plurality of first wires arranged around the core wire between the core wire and an internal surface of the outer, each of the plurality of first wires having an outer diameter contacting the internal surface of the outer; and a plurality of second wires including a different material from a material of the plurality of first wires, having an outer diameter less than an outer diameter of the plurality of first wires, not contacting the internal surface of the outer when the core wire is straight, not curved, and provided more than the number of the plurality of first wires to be arranged between adjacent ones of the plurality of first wires.

Each of the plurality of first wires, the number of which is less than the number of the plurality of second wires, may include a stainless steel (SUS) material, and the plurality of second wires each may include a steel (SWRH) material.

The plurality of first wires may be arranged surrounding the core wire by an angle of 120°, contacting the internal surface of the outer at three points, and the plurality of second wires may arranged in pairs in spaces between adjacent ones of the plurality of first wires.

The core wire may have an outer diameter that is equal to or greater than 35% and equal to or less than 60% of an outer diameter of the inner.

The plurality of second wires may be two times more than the number of the plurality of first wires.

### ADVANTAGEOUS EFFECTS

According to embodiments of the present invention, first wires contacting an outer are arranged with constant intervals, and second wires including a different material from that of the first wires are formed to have an outer diameter that is less than that of the first wires so that the first wires only contact the outer and operating performance between an inner and the outer may be improved.

According to embodiments of the present invention, the first wires are arranged with constant intervals and include a stainless-steel material having excellent sliding characteristics, and thus, frictional resistance with respect to the outer is reduced and operating performance of an inner may be improved. Moreover, second wires are formed of a steel material, a tension required by the power transmission cable may be ensured, and at the same time, the durability may be also improved.

According to embodiments of the present invention, the frictional resistance between the inner and the outer is reduced so as to improve accuracy in power transmission via the inner, and at the same time, manufacturing costs of the power transmission cable may be reduced.

### DESCRIPTION OF THE DRAWINGS

FIG. 1 is a perspective view of an automotive power transmission cable according to the related art.
FIG. 2 is a cross-sectional view taken along a line II-II of FIG. 1.
FIG. 3 is a diagram showing a utilization state of the automotive power transmission cable according to the related art.
FIG. 4 is a perspective view of an automotive power transmission cable according to an embodiment.
FIG. 5 is a cross-sectional view taken along a line V-V of FIG. 4.
FIG. 6 is a diagram showing a utilization state according to an embodiment.

### MODE OF THE INVENTION

Hereinafter, an automotive power transmission cable according to embodiments will be described in detail with reference to accompanying drawings.

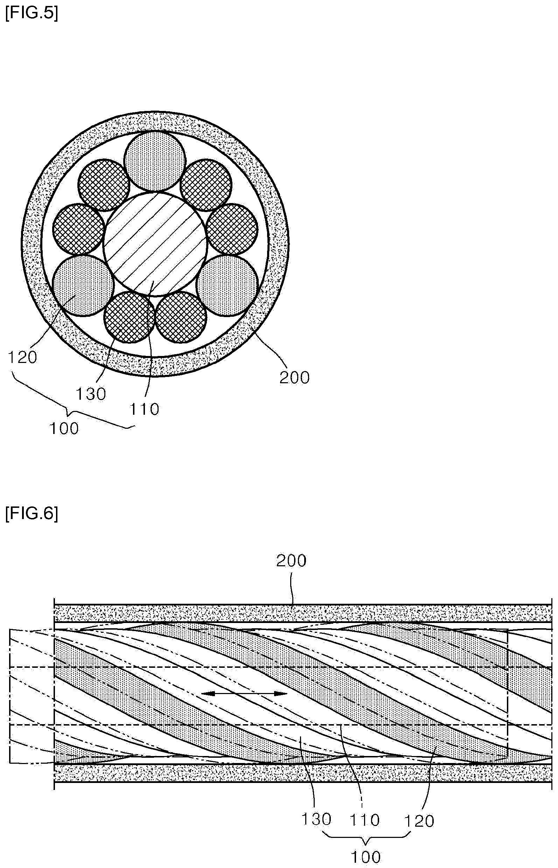

FIG. 4 is a perspective view of an automotive power transmission cable according to an embodiment, FIG. 5 is a cross-sectional view of FIG. 4, and FIG. 6 is a diagram showing utilization state according to an embodiment.

As shown in FIGS. 4 and 5, the automotive power transmission cable according to the embodiment includes an inner 100 and an outer 200.

The outer 200 is a well-known element and is described above in the description of the related art, and additional descriptions thereof are omitted.

As shown in FIG. 6, the inner 100 is provided to move relative to the outer 200, so as to transmit power among components of a vehicle while moving with respect to the outer 200 in the outer 200.

The inner 100 includes a core wire 110, a plurality of first wires 120, and a plurality of second wires 130.

The core wire 110 is centered in the inner 100.

In addition, the first wires 120 are arranged around the core wire 110 between the core wire 110 and an internal surface of the outer 200 with constant intervals therebetween, and each of the first wires 120 has an outer diameter enough to contact the internal surface of the outer 200.

The second wires 130 include a different material from that of the first wires 120, and each of the second wires 130 has an outer diameter that is less than that of each of the first wires 120 enough not to contact the internal surface of the outer 200 when the core wire 110 is straight, not curved, and the second wires 130, the number of which is greater than that of the first wires 120, are arranged between adjacent ones of the first wires 120.

According to the embodiment, the first wires 120 contacting the outer 200 are arranged with constant intervals, and the second wires 130 including a different material from that of the first wires 120 have the outer diameter less than that of the first wires 120. Thus, the first wires 120 only contact the outer 200 so as to reduce frictional resistance between the inner 100 and the outer 200 and to improve operating performance of the inner 100 and accuracy in the power transmission.

In addition, the number of the first wires 120 according to the embodiment is less than that of the second wires 130, and the first wires 120 include a stainless steel (SUS) material. In addition, the second wires 130 may include a steel (SWRH) material.

As described above, according to the embodiment, since the first wires 120 are arranged with the constant intervals and include the SUS material having excellent frictional resistance in order to improve the frictional resistance with respect to the outer 200, and since each of the second wires 130 includes the SWRH material, the tension required by the power transmission cable may be ensured and durability may be improved.

In addition, according to the embodiment, the frictional resistance between the inner 100 and the outer 200 is reduced so as to increase accuracy in power transmission via the inner 100 and reduce manufacturing costs of the power transmission cable.

In addition, the first wires 120 according to the embodiment are arranged around the core wire 110 by an angle of 120° so as to contact the internal surface of the outer 200 at three points, and the second wires 130 may be arranged in pairs in spaces between the adjacent first wires 120.

Therefore, according to the embodiment, since the first wires 120 contact the internal surface of the outer 200 at three points, the inner 100 may stably contact the outer 200 and operating accuracy may be ensured.

According to another embodiment, the first wires 120 may contact the inner surface of the outer 200 at two points asymmetrically with each other, and the second wires 130 may be arranged at one to three points. The first wires 120 may contact the internal surface of the outer 200 at two points symmetrically or asymmetrically.

On the other hand, if the first wires 120 are arranged to contact the internal surface of the outer 200 at four or more points, sensitivity in operations may degrade due to the structure of too many contact points.

In addition, the core wire 110 according to the embodiment may have an outer diameter that is 35% to 60% of the outer diameter of the inner 100.

According to the embodiment, in a case where the outer diameter of the inner 100 is Ø3.20, the outer diameter of the core wire 110 is Ø1.20 to Ø1.80, the outer diameter of the first wire 120 is Ø0.70 to Ø0.93, and the outer diameter of the second wire 130 is Ø0.60 to Ø0.87, so that a step of Ø0.08 to Ø0.10 is generated between the wires. Here, the number of the first wires is two (2) to three (3), and the number of the second wires is five (5) to nine (9).

As described above, according to the embodiment, efficiency of 88% to 92% and the frictional resistance (sliding characteristics) is 3N to 5N, whereas a power transmission cable according to the related art, in which the inner 10 has an outer diameter of Ø3.2, the outer diameter of the center line 11 of the inner 10 is Ø2.0, and twelve wires 12 have the outer diameter of Ø0.6, has an efficiency of 75% to 80% and the frictional resistance of 6N to 8N. Thus, according to the embodiment, the efficiency is improved, and at the same time, the frictional resistance is reduced.

In addition, according to another embodiment in which the outer diameter of the inner 100 is Ø2.30, the outer diameter of the core wire 110 is Ø1.20, the outer diameter of the first wire 120 is Ø0.55, and the outer diameter of the second wire 130 is Ø0.45. In a case where the outer diameter of the inner 100 is Ø2.40, the thickness of the core wire 110 is Ø1.20 to Ø1.35, the outer diameter of the first wire 120 is Ø0.53 to Ø0.60, and the outer diameter of the second wire 130 is Ø0.45 to Ø0.50, and thus, a step between the wires may be Ø0.08 to Ø0.10. In addition, the number of the first wires is three (3), and the number of the second wires is six (6) to nine (9).

Unlike the core wire 110 according to the embodiment, when a ratio of the outer diameter of the core wire 110 is less than 35% with respect to the outer diameter of the inner 100, the outer diameter of the first wire 120 increases, and thus, it is difficult to wind the first wires 120 on the core wire 110. Otherwise, if the ratio of the outer diameter of the core wire 110 exceeds 60% with respect to the outer diameter of the inner 110, the outer diameter of the first wires 120 is too small to make the first wires 120 contacting the outer 200 worn out faster, and thus, according to the embodiment, the ratio of the outer diameter of the core wire 110 may range from 35% to 60% with respect to the outer diameter of the inner 100.

As described above, when the ratio of the outer diameter of the core wire 110 ranges from 35% to 60% with respect to the outer diameter of the inner 100, a process of winding the first wires 120 and the second wires 130 on the core wire 110 may be performed easy and the tension required by the power transmission cable may be implemented.

In addition, the number of the second wires 130 according to the embodiment may be twice the number of the first wires 120. When the second wires 130 are two times more than the first wires 120, durability of the power transmission cable may be ensured.

While the present disclosure has been particularly shown and described with reference to exemplary embodiments thereof, it will be understood that various changes in form and details may be made therein without departing from the spirit and scope of the following claims.

## Claims

1. An automotive power transmission cable for transmitting power among components in a vehicle, the automotive power transmission cable comprising:
a hollow outer; and
an inner provided in the outer to be movable relative to the outer to transmit the power among the components in the vehicle while moving with respect to the outer in the outer,
wherein the inner comprises:
a core wire centered in the outer;
a plurality of first wires arranged around the core wire between the core wire and an internal surface of the outer, each of the plurality of first wires having an outer diameter contacting the internal surface of the outer; and
a plurality of second wires including a different material from a material of the plurality of first wires, having an outer diameter less than an outer diameter of the plurality of first wires, not contacting the internal surface of the outer when the core wire is straight, not curved, and provided more than the number of the plurality of first wires to be arranged between adjacent ones of the plurality of first wires.

2. The automotive power transmission cable of claim 1, wherein each of the plurality of first wires, the number of which is less than the number of the plurality of second wires, includes a stainless steel (SUS) material, and the plurality of second wires each includes a steel (SWRH) material.

3. The automotive power transmission cable of claim 1, wherein the plurality of first wires are arranged surrounding the core wire by an angle of 120°, contacting the internal surface of the outer at three points, and the plurality of second wires are arranged in pairs in spaces between adjacent ones of the plurality of first wires.

4. The automotive power transmission cable of claim 1, wherein the core wire has an outer diameter that is equal to or greater than 35% and equal to or less than 60% of an outer diameter of the inner.

5. The automotive power transmission cable of claim 1, wherein the plurality of second wires are two times more than the number of the plurality of first wires.
